(19) Europäisches Patentamt
European Patent Office
Office européen des brevets

(11) **EP 1 937 859 B1**

(12) **EUROPÄISCHE PATENTSCHRIFT**

(45) Veröffentlichungstag und Bekanntmachung des Hinweises auf die Patenterteilung:
**17.06.2009 Patentblatt 2009/25**

(21) Anmeldenummer: 07819301.8

(22) Anmeldetag: **25.10.2007**

(51) Int Cl.:
*C22B 15/00* (2006.01)    *F27B 3/04* (2006.01)
*F27B 3/08* (2006.01)    *F27D 23/00* (2006.01)

(86) Internationale Anmeldenummer:
**PCT/EP2007/009249**

(87) Internationale Veröffentlichungsnummer:
**WO 2008/052690 (08.05.2008 Gazette 2008/19)**

(54) **VERFAHREN ZUR KONTINUIERLICHEN ODER DISKONTINUIERLICHEN GEWINNUNG EINES METALLS ODER MEHRERER METALLE AUS EINER DAS METALL ODER EINE VERBINDUNG DES METALLS ENTHALTENDE SCHLACKE**

METHOD FOR THE CONTINUOUS OR DISCONTINUOUS EXTRACTION OF A METAL, OR OF MULTIPLE METALS FROM A SLAG CONTAINING THE METAL, OR A COMPOUND OF THE METAL

PROCÉDÉ D'OBTENTION CONTINUE OU DISCONTINUE D'UN MÉTAL OU DE PLUSIEURS MÉTAUX À PARTIR D'UN LAITIER CONTENANT LE MÉTAL OU UN COMPOSÉ DU MÉTAL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.11.2006 DE 102006052181**

(43) Veröffentlichungstag der Anmeldung:
**02.07.2008 Patentblatt 2008/27**

(73) Patentinhaber: **SMS Siemag AG**
**40237 Düsseldorf (DE)**

(72) Erfinder:
• **Degel, Rolf**
**40878 Ratingen (DE)**
• **Kunze, Jürgen**
**46509 Xanten (DE)**

(74) Vertreter: **Klüppel, Walter et al**
**Patentanwälte Hemmerich & Kollegen**
**Hammerstrasse 2**
**57072 Siegen (DE)**

(56) Entgegenhaltungen:
**US-A- 5 765 489        US-A1- 2006 196 308**

**Beschreibung**

Die Erfindung betrifft ein Verfahren zur kontinuierlichen oder diskontinuierlichen Gewinnung eines Metalls oder mehrerer Metalle aus einer das Metall oder eine Verbindung des Metalls enthaltenden Schlacke, bei dem die verflüssigte metallhaltige Schlacke in einem primären oder sekundären Schmelzaggregat erhitzt wird.

Beim Erschmelzen von Kupferkonzentraten werden Kupferstein und Schlacke erzeugt. Die Schlacke enthält Kupfer sowohl in gelöster Form als auch in Form von mechanisch übergegangenen Steineinschlüssen. Es gibt zwei wesentliche Verfahren zur Reinigung der Schlacke: Die Schlackeflotation nach dem Abschrecken, Zerkleinern und Mahlen und die pyrometallurgische Reduktion der flüssigen Schlacke.

Pyrometallurgische Schlackereinigung oder Aufschmelzen von Konzentraten wird zumeist in drei Varianten vorgenommen, nämlich:

1) in einem AC-Lichtbogenofen durch Reduktion mit Koks und Elektroden, Schlackevorwärmung und Sedimentation,

2) in horizontalen zylindrischen Drehöfen durch Eindüsung eines Reduktionsmittels, z. B. in einem Teniente-Schlakkereinigungsofen,

3) in vertikalen Konverter mit Eindüsung eines Reduktionsmittels. z. B. TBRC oder IsaSmelt, Aussmelt oder ähnlichen Verfahren.

Die Schlackereinigung erfordert die Reduktion von Magnetit, um die suspendierten Einschlüsse freizusetzen und ihr Absetzen zu ermöglichen und die Koreduktion von kupferartigem Oxid zuzulassen.

Die am häufigsten eingesetzte Kupferschlackereinigung in AC-Lichtbogenöfen erfordert einen verhältnismäßig großen Ofen wegen der erforderlichen Reduktions- und Sedimentationszeit, welche 3 bis 8 Stunden beträgt. Sie verursacht einen relativ hohen spezifischen Energieverbrauch aufgrund des starken spezifischen Einflusses der Wärmeverluste. Die Schlackereinigung in einem Lichtbogenofen wird als schubweiser oder halbkontinuierlicher Prozess durchgeführt. Die Flexibilität des Lichtbogenofens bei der Temperaturregelung erlaubt eine richtige Schlackevorwärmung. Die Bildung von dispergierten metallischen Kupfereinschlüssen als Produkt der Reduktion von kupferartigem Oxid zusammen mit einem Teil kleiner Kupfersteineinschlüsse begrenzen jedoch die Phasentrennung und ausreichende Kupferrückgewinnung.

Ein Verfahren zur Rückgewinnung von Metallen aus metallhaltigen Schlacken, insbesondere von Eisen-Kupfer-Schlacken in einem Schmelzofen ist aus der US 4,110,107 bekannt. Die geschmolzene Schlacke wird in einen Lichtbogenofen eingebracht, in dem ein Aufschmelzen erfolgt. Eine Kohlenstoff-Einspritzeinheit wird eingesetzt, um Kohlenstoff in den Bodenbereich des Schmelzebades einzubringen. Ein Verschlackungsmittel wie beispielsweise CaO wird ebenfalls in das Bad eingebracht. Nach der Reduktion wird das Metall aus dem Ofen entnommen.

Ein ähnliches Verfahren zum Rückgewinnen insbesondere von Nickel und einer Nickel-Kupfer-Mischung aus einer Schlackenschmelze ist aus der US 4,036,636 bekannt. Dort wird Magnetit in der Schlacke mit kohlenstoffhaltigen Materialien reduziert. Dabei erfolgt ein Mischen der Schlacke mit einem mechanischen Rührer, während die Reduktion der Schlacke stattfindet.

Aus der WO 01/49890 A1 ist ein Verfahren zum Herstellen von Blisterkupfer direkt aus Kupfersulfat-Konzentrat bekannt, bei dem das Kupfer aus feingemahlenem und gekühltem Kupferstein in einem Reaktionsbehälter unter Sauerstoffanreicherung gewonnen wird. Die Sauerstoffanreicherung erfolgt unter Zufuhr von Sauerstoff-angereicherter Luft, wobei der Sauerstoffgehalt mindestens 50 % beträgt. Blisterkupfer, auch »Blasenkupfer« genannt, ist unraffiniertes, blasiges Kupfer. Kupfer besitzt im schmelzflüssigen Zustand ein höheres Lösevermögen für Gase als das feste Metall. Beim Erstarren scheiden sich die Gase als kleine Blasen (englisch: blister) im Kupfer aus.

Die US 4,060,409 zeigt ein pyrometallurgisches System, mit dem Material in geschmolzenem Zustand gehalten werden kann. Das System weist ein Gefäß zur Aufnahme des Materials auf, wobei im Gefäßinneren eine Anzahl von Zellen gleicher Größe ausgebildet ist. Weiterhin ist eine Vielzahl mechanischer Rührer vorgesehen, um das geschmolzene Material rühren zu können.

Die US 6,436,169 offenbart ein Verfahren zum Betreiben eines Kupfer-Schmelzofens, wobei eine eisenhaltige Substanz mit mehr als 80 Gewichtsprozent Eisen zugegeben wird, die eine Dichte zwischen 3,0 und 8,0 aufweist; der Durchmesser der Partikel liegt dabei zwischen 0,3 und 15 Millimetern. Die eisenhaltige Substanz wird eisenhaltiger Kupferschlacke zugegeben. Dann wird eine Reduktion von $Fe_3O_4$ zu FeO durchgeführt.

Auch US 5,765,489 und WO 2006/131372 A1 offenbaren pyrometallurgische Verfahren zur Metallgewinnung.

Eine Vorrichtung zur kontinuierlichen Kupferverhüttung ist aus der EP 0 487 032 B1 bekannt. Sie weist einen Schmelzofen zum Schmelzen und Oxidieren von Kupferkonzentrat auf, um ein Gemisch aus Stein und Schlacke zu erzeugen. Weiterhin ist ein Trennofen zum Trennen des Steins von der Schlacke vorgesehen. In einem Konverterofen wird zur Erzeugung von Rohkupfer der von der Schlacke abgetrennte Stein oxidiert. Schmelzeabstichrinnmittel verbinden den Schmelzofen, den Trennofen und den Konverterofen. Zum Raffinieren des in dem Konverterofen erzeugten Kupfers sind Anodenöfen vorgesehen.

Eine Verbindung zwischen dem Konverterofen und den Anodenöfen wird mit Rohkupferrinnmittel geschaffen.

Aus der EP 0 487 031 B1 geht ein Verfahren zum kontinuierlichen Schmelzen von Kupfer hervor. Auch hier ist ein Schmelzofen, ein Trennofen und ein Konverterofen vorgesehen, die über Fließverbindungsmittel miteinander verbunden sind. Ferner sind Anodenöfen vorgesehen, die mit dem Konverterofen in Fließverbindung stehen. Das Kupferkonzentrat wird in den Schmelzofen eingespeist, wo ein Schmelzen und Oxidieren des Konzentrates zur Herstellung einer Mischung aus Rohstein und Schlacke erfolgt. Anschließend wird die Mischung aus Rohstein und Schlacke dem Trennofen zugeführt, in dem ein Trennen des Rohsteins von der Schlacke erfolgt. Dann wir der von der Schlacke getrennte Rohstein in den Konverterofen verbracht, wo er zur Herstellung von Rohkupfer oxidiert wird. Das Rohkupfer fließt dann in einen der Anodenöfen, wo das Kupfer hergestellt wird.

Die vorbekannten Verfahren zur Gewinnung eines Metalls aus einer das Metall enthaltenden Schlacke sind bezüglich ihrer Effizienz noch verbesserungsbedürftig.

Der Erfindung liegt daher die Aufgabe zugrunde, ein verbessertes Verfahren zur Rückgewinnung von Metallen, insbesondere von Kupfer, aus Schlacken bereitzustellen.

Die Lösung dieser Aufgabe durch die Erfindung ist dadurch gekennzeichnet, dass die metallhaltige Schlacke in einem als Wechselstrom-Elektroofen ausgebildeten primären oder sekundären Schmelzaggregat erhitzt wird und die Schmelze dann von dem primären oder sekundären Schmelzaggregat in einen als Gleichstrom-Elektroofen ausgebildeten Ofen verbracht wird, in dem eine elektrolytische Abscheidung des zu gewinnenden Metalls erfolgt, wobei in das primäre oder sekundäre Schmelzaggregat ein Reduktionsmittel in Form von Calciumsilizid (CaSi), Calciumkarbid ($CaC_2$), Ferrosilicium (FeSi), und/oder Aluminium (Al) aufgegeben und/oder injiziert wird.

Als primäres oder sekundäres Schmelzaggregat wird bevorzugt ein Lichtbogenofen eingesetzt.

Das zu gewinnende Metall ist bevorzugt Kupfer (Cu), das sich in einer kupferhaltigen Schlacke befindet. Es ist aber auch möglich, dass es sich bei dem zu gewinnenden Metall um Blei (Pb), Zink (Zn), Platin (Pt), Chrom (Cr) oder Nickel (Ni) handelt.

In dem als Wechselstrom-Elektroofen ausgebildeten primären oder sekundären Schmelzaggregat kann eine Vorabreduktion oder Oxidation der Schlacke bzw. von Metallkonzentraten und ein Abscheiden von Metallstein oder einer Metalllegierung, insbesondere von Kupferstein, erfolgen, wobei in dem zweiten als Gleichstrom-Elektroofen ausgebildeten Ofen eine tiefgehende Schlackenreduktion und ein Entfernen von Einschlüssen erfolgt.

In dem zweiten als Gleichstrom-Elektroofen ausgebildeten Ofen kann während der Gewinnung des Metalls auch ein elektromagnetisches Rühren der Schmelze erfolgen. Zur Erzeugung des elektromagnetischen Rührens kann mindestens ein Elektromagnet auf die sich im zweiten Ofen befindliche Schmelze wirken. Es kann aber auch vorgesehen werden, dass zur Erzeugung des elektromagnetischen Rührens mindestens ein Dauermagnet auf die sich im zweiten Ofen befindliche Schmelze wirkt. Der mindestens eine Magnet erzeugt bevorzugt ein Magnetfeld zwischen 50 und 1.000 Gauss, wobei das Magnetfeld zumindest einen Teil des Querschnittes der Schmelze und des Bereichs der Elektroden in dem zweiten Ofen erfasst.

In das primäre oder sekundäre Schmelzaggregat kann während des Erhitzens weiterhin als Reduktionsmittel auch Koks zugegeben werden.

Auf die Schmelzeoberfläche in dem zweiten Ofen kann kohlenstoffhaltiges Material, insbesondere Koks, so aufgegeben werden, dass sich eine Schicht des kohlenstoffhaltiges Materials mit im wesentlichen konstanter Dicke ausbildet, wobei die Schicht; als Anode wirkend, mit einer elektrischen Verbindung in Kontakt steht. Ferner kann vorgesehen werden, dass im Bodenbereich unter der Schmelze in dem zweiten Ofen eine Schicht aus Metallstein bzw. Metalllegierung, insbesondere aus Kupferstein, mit im wesentlichen konstanter Dicke aufrechterhalten wird, wobei die Schicht, als Kathode wirkend, mit einer elektrischen Verbindung in Kontakt steht.

Die Erfindung schlägt also eine zweistufige Schlackereduktion und die Entfernung des Metalls (vorzugsweise des Kupfers) in zwei Lichtbogenöfen vor, wobei die genannten spezifischen Reduktionsmittel vorgesehen werden, die eine besonders gute Reduktion erlauben. Der erste Ofen, der Drehstrom-Lichtbogenofen, dient der Vorabreduktion der Schlacke und der Abscheidung von Metallstein (Kupferstein), gefolgt von einer tiefgehenden Schlackereduktion und Entfernung von Einschlüssen in einem DC-Reduktions-Rinnenofen mit elektromagnetischem Rühren. Der Einsatz von elektromagnetischem Rühren, welches den Stoffübergang auf die Reduktionsfläche und die Koaleszenz der Einschlüsse verbessert, gemeinsam mit Schlackeelektrolyse und elektrokinetischen Phänomenen ermöglichen eine wirksame Schlackereinigung und hohe Rückgewinnung von Metall, insbesondere Kupfer.

In den Zeichnungen ist ein Ausführungsbeispiel der Erfindung dargestellt. Es zeigen:

Fig. 1      eine schematische Darstellung eines primären bzw. sekundären Schmelzaggregats in Form eines Drehstrom-Lichtbogenofens und eines nachgeschalteten DC-Reduktions-Rinnenofens und

Fig. 2a      und

Fig. 2b die geschnittene Vorderansicht und die geschnittene Seitenansicht des DC-Reduktions-Rinnenofens zur tiefgehenden Schlackeredukti- on und Entfernung von Einschlüssen unter Verwendung eines Koks- betts und flüssigem Kupferstein als Elektroden.

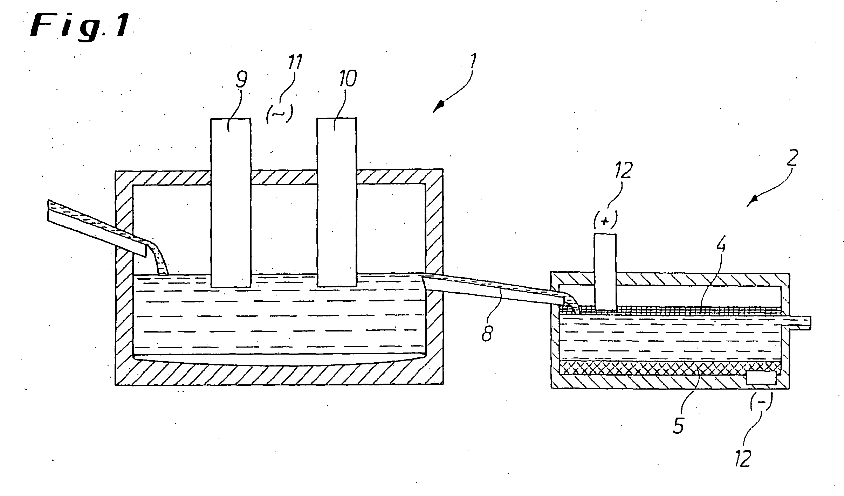

In Fig. 1 ist ein primäres oder sekundäres Schmelzaggregat 1 in Form eines Wechselstromofens zu sehen, an den sich ein zweiter Ofen 2 in Form eines Gleichstromofens anschließt. Die im Ofen 1 vorbereitete Schmelze aus Kupferschlacke wird über ein Verbindungsmittel 8 in Form einer Schmelzerinne (auch möglich in Form eines Rechteckofens) in den zweiten Ofen 2 geleitet.

In den ersten Ofen 1 und namentlich in die sich in diesem Ofen befindliche Schlackenschmelze tauchen zwei Elektroden 9 und 10 in Form von GraphitElektroden ein, die an eine Wechselstromquelle 11 angeschlossen sind.

Die Schlacken enthalten je nach Art des primären und/oder sekundären Schmelzaggregats 1

- Metalltröpfchen wie beispielsweise bei Ferrolegierungsprozessen (z. B. FeNi, FeMn, FeCr, FeNb und $TiO_2$-Herstellungsprozessen),

- Metalle in sulfidischer oder oxidischer Form, wobei IsaSmelt, Aussmelt, Outokumpu oder TBRC als Primärschmelzer fungieren,

- Metalle und Metalllegierungen, die bei der Verarbeitung von oxidischen Einsatzmaterialien, z. B. aus einem Elektroofen oder Schachtofen, als Produkte entstehen.

Der zweite Ofen 2 hat einen Schlackeneintritt 16 für die Schlacke 15 sowie einen Schlackenaustritt 17. Im zweiten Ofen 2 befinden sich zwei Elektroden 4 und 5, die plattenartig ausgebildet sind. Beide Elektroden 4, 5 sind über elektrische Verbindungen in Form einer Graphit-Kontaktelektrode 6 bzw. 7 an eine Gleichstromquelle 12 gekoppelt. Die obere horizontal liegende Elektrode 6 ist an den Plus-Pol der Gleichstromquelle 12 angeschlossen und dient als Anode. Entsprechend ist die untere ebenfalls horizontal angeordnete Elektrode 5 an den Minus-Pol der Gleichstromquelle 12 angeschlossen und dient damit als Kathode. Über einen elektrolytischen Prozess wird das Kupfer gewonnen.

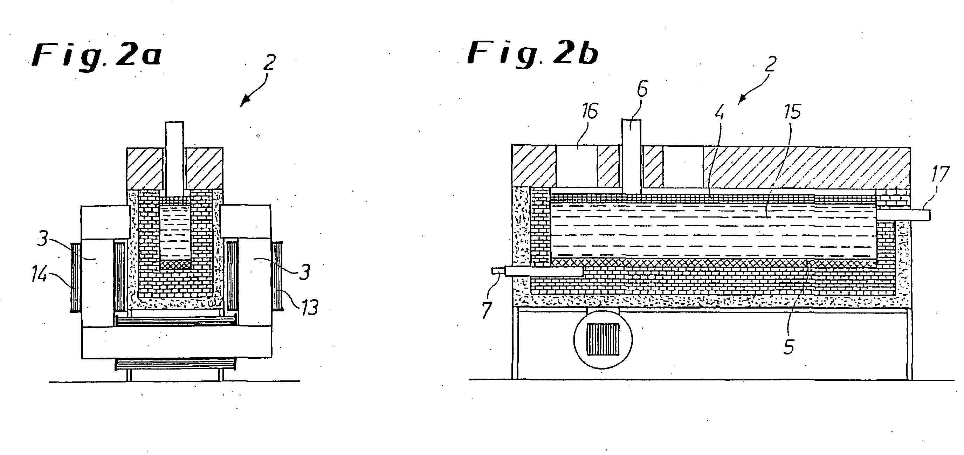

Wie Fig. 2 entnommen werden kann, ist der zweite Ofen 2 als Rinnenofen ausgebildet. Seitlich sind elektrische Spulen 13 und 14 um Metallkeme angeordnet, die damit Elektromagnete 3 bilden. Mit diesen Magneten wird ein elektromagnetischer Rühreffekt erzeugt, die die Schmelze im zweiten Ofen 2 rührt, s. u.

Wesentliches Merkmal ist, dass die metallhaltige Schlacke im Wechselstrom-Elektroofen 1 erhitzt wird und die Schmelze dann vom Ofen 1 in den als Gleichstrom-Elektroofen ausgebildeten Ofen 2 verbracht wird, in dem eine elektrolytische Abscheidung des zu gewinnenden Metalls erfolgt, das z. B. als Sulfid oder Oxid vorliegen kann. Dabei wird in den Ofen 1 ein Reduktionsmittel in Form von Calciumsilizid (CaSi), Calciumkarbid ($CaC_2$), Ferrosilicium (FeSi), Aluminium (Al) und/oder Reduktionsgasen aufgegeben bzw. injiziert.

Bei der Reduktion findet ein an sich bekannter Prozess statt, der - am nicht erfindungsgemäßen Beispiel der Zugabe von Koks - wie folgt aussieht: Magnetit und kupferartiges Oxid in der Schlacke reagieren hier mit dem Kohlenstoff der Graphitelektroden 9, 10 und zugegebenen Koks gemäß der Gleichungen:

$$Fe_3O_4 + CO = 3\ FeO + CO_2$$

$$Cu_2O + CO = 2\ Cu + CO_2$$

$$CO_2 + C = 2\ CO$$

Die Reduktion von kupferartigem Oxid wird durch die Magnetitkoreduktion eingeschränkt. Die Bedingungen der Koreduktion werden durch das Gleichgewicht dieser Reaktion bestimmt:

$$(Cu_2O)_{Schlacke} + 3\ (FeO)_{Schlacke} \Leftrightarrow 2\ (CU)_{Metall} + (Fe_3O_4)_{Schlacke}$$

Der Kupfergehalt in der Schmelzenschlacke liegt zwischen 2 und 10 % und der Magnetitgehalt zwischen 10 und 20 % je nach Schmelzverfahren und der erzeugten Steingüte.

Der erste Schritt der Schlackebehandlung im AC-Lichtbogenofen 1 konzentriert sich auf die Magnetitreduktion auf einen Wert von 7 bis 8 % und einen Kupfergehalt von 0,8 bis 1,2 %, was einen Einheitsenergieverbrauch von 50 bis 70 kWh/t erfordert, je nach ursprünglicher Schlackezusammensetzung. Der oben genannte Grad der Schlackereduktion erlaubt die Reduktionszeit um ca. 50 % zu kürzen, was einer zweifachen Erhöhung der Ofenbehandlungskapazitäten entspricht. Die Schlacke wird kontinuierlich oder in regelmäßigen Abständen zum zweiten DC-Reduktions-Rinnenofen 2 (Gleichstromofen) abgestochen.

Das Koksbett 4 auf der Schlackeoberfläche, mit dem die Graphitelektrode 6 den Kontakt zur Gleichstromquelle 12 herstellt, hat die Funktion der Anode und der flüssige Stein 5 in Kontakt mit dem Graphitblock 7 ist eine Kathode im DC-Reduktions-Rinnenofen 2.

Einlassseitig im Ofen sind zwei Permanentmagnetblöcke im Fenster des Ofengefäßes angeordnet und zwar auf halber Höhe der Schlackeschicht. Das Zusammenwirken eines nicht gleichförmigen, horizontalen magnetischen Felds mit einem nicht gleichförmigen vertikalen konstanten elektrischen Feld induziert den Gradienten der auf die Schlak-ke wirkenden Lorentzkraft.

Die Lorentz-Kraft, die in jedem elementaren Volumen leitfähiger Flüssigkeit, wie z. B. flüssiger Schlacke, in gekreuzten konstanten elektrischen und permanenten magnetischen Feldern wirkt, verändert offensichtlich die relative Dichte der Flüssigkeit:

$$\gamma_A = \gamma \pm j \times B$$

mit:

$\gamma_A$ - scheinbare relative Dichte in N m$^{-3}$,
$\gamma$ - relative Dichte in N m$^{-3}$,
$j$ - Stromdichte in einer Flüssigkeit in A m$^{-2}$,
$B$ - magnetische Induktion in T.

Mit oben genannter Kraft bei einer Stromdichte von 200 bis 2000 A/m$^2$ und einer magnetischen Feldstärke von 0,005 bis 0.1 Tesla ist die Schlackegeschwindigkeit 1 bis 2 Größenordnungen größer im Vergleich zu den natürlichen Konvektionsgeschwindigkeiten. Sie versetzt die Schlacke im Bereich des Magnets in intensive Rotation, wodurch der Magnetitübergang auf die Koksoberfläche verbessert und die Reduktion beschleunigt wird. Bei der hohen Temperatur der Schlackereduktion (1200 bis 1300 °C) werden die Reaktionen bei der Reduktion des Magnetits und Koreduktion des kupferartigen Oxids durch Stoffübergang gesteuert, das Rühren der Schlacke erhöht die Reduktionsgeschwindigkeit wesentlich.

Darüber hinaus verhindert das Rühren der Schlacke die Bildung von stagnierender Flüssigkeit und homogenisiert die Schlacke. Das Rühren der Schlacke in der ersten Stufe des Verfahrens für die Entfernung von Einschlüssen ist günstig, womit die Wahrscheinlichkeit ihrer Kollision und ihrer Koaleszenz erhöht wird.

Die Schlackebewegung erhöht die Wahrscheinlichkeit der Kollision von Steineinschlüssen und metallischem Kupfer, womit deren Koaleszenz und Absetzen verbessert wird. Der zweite Teil des Rinnenofens 2 erfährt keine intensive Schlackebewegung und erlaubt eine ruhige Sedimentation der Einschlüsse.

Aufgrund der Ionenstruktur der flüssigen Schlacke regt der Gleichstrom die Schlackeelektrolyse an. Kathodische Reduktion und anodische Oxidation resultieren in der Magnetitreduktion, Kupferabscheidung und Bildung von Kohlenmonoxid auf den Elektroden entsprechend den Reaktionen:

Kathode: $Fe^{3+} + e = Fe^{2+}$
$Cu^+ + e = Cu°$

Anode: $SiO_4^{4-} + 2\,C = SiO_2 + 2[CO] + 4\,e$
$O^{2-} + C = [CO] + 2\,e$

Die kathodische Zerlegung von Magnetit und die Abscheidung von Kupfer erhöhen die gesamte Geschwindigkeit der Magnetitreduktion und Entfernung von Kupfer. Die Abscheidung von CO als anodisches Produkt bildet weitere Zentren der Magnetitreduktion.

Die zusätzliche auf metallische Einschlusse wirkende Kraft als Ergebnis der scheinbaren Änderung der relativen Dichte der Schlacke und die Interaktion des Stroms im Metall und des Magnetfelds sind gleich:

$$F_{EMB} = 2\,\pi\,j\,B\,r^3$$

mit:

$F_{EBF}$ - Auftriebskraft in N,
j - Stromdichte in A/m$^2$ ,
B - Induktivität magnetisches Feld in T,
r - Radius des Einschlusses in m.

Die Interaktion des elektrischen Felds mit der elektrischen Oberflächenladung auf der Einschlussoberfläche lässt den Metalltropfen entlang der elektrischen Feldlinien wandern; die Wanderungsgeschwindigkeit, bekannt als Phänomen der Elektrokapillaritätsbewegung, wird durch die Formel von Levich beschrieben:

$$v_{EM} = \frac{\varepsilon \, E \, r}{2 \, \eta_S \left(1 + \dfrac{r}{2 \, \kappa \, w}\right)}$$

mit:

$v_{EM}$ - Wanderungsgeschwindigkeit in m s$^{-1}$,
$\varepsilon$ - Oberflächenladung in coul m$^{-2}$,
E - Stärke des elektrischen Felds in V m$^{-1}$,
$\eta_S$ - Schlackeviskosität in Pa s,
$\kappa$ - Spezifische Leitfähigkeit der Schlacke in $\Omega^{-1}$ m$^{-1}$,
w - Widerstand der Metall/Schlackegrenzfläche in $\Omega$ m$^2$.

Basierend auf der elektrischen Ladungsdichte nimmt die Wanderungsgeschwindigkeit des Metalls oder der Steineinschlüsse gemäß der oben aufgeführten Formel mit dem Tropfenradius ab. Die Wanderungsgeschwindigkeit ist bei kleineren Einschlüssen wesentlich höher als das Absetzen durch Schwerkraft.

Die Schlackeverarbeitung in gekreuzten elektrischen und magnetischen Feldern nutzt eine Reihe von Phänomenen, durch die der Schlackereinigungsprozess sehr intensiv und effektiv wird. Elektromagnetisches Rühren der Schlacke erhöht den Stoffübergang, wodurch die Schlackereduktion beschleunigt und die Koaleszenz der Einschlüsse gefördert wird. Gleichzeitige Schlackeelektrolyse wirkt bei kathodischer Reduktion von Magnetit und Kupferoxid und anodischer Bildung von Kohlenmonoxid als zusätzliches Reduktionsmittel. Elektrokapillare Wanderung der Einschlüsse begünstigt deren Koaleszenz und führt zur Entfernung von Einschlüssen aus der Schlacke.

Nicht erfindungsgemäßen Beispiel:

Schlacke aus dem Erschmelzen von Konzentrat in einem Flash-Schmelzaggregat enthält 4% Cu und 15% $Fe_3O_4$. Die Schlacke wird alle 3 Stunden abgestochen und durch eine Rinne an den 9,5 MVA-Drehstrom-Lichtbogenofen 1 übergeben. Die Schlackeproduktionsmenge beträgt 30 t/h, dies entspricht einer Verarbeitung von 90 t in jedem Zyklus. Der Koksverbrauch beläuft sich auf ca.8 kg/t und der Energieverbrauch auf ungefähr 70 kWh/t, entsprechend einer durchschnittlichen Leistungsaufnahme von 6,3 MW. Nach einer Stunde beginnt der Schlackeabstich auf dem Lichtbogenofen über einen Zeitraum von 2 Stunden. Die Schlacke mit einem Cu-Gehalt von 1,1 % und 7 % $Fe_3O_4$ wird durch die Rinne 8 in den DC-Lichtbogenofen 2 mit einer Kammer transportiert, welche 4 m lang und 1 m breit ist. Der Reduktions-Rinnenofen zur halbkontinuierlichen Schlackereinigung ist in Fig. 2 dargestellt. Die Schlacke fließt 2 Stunden kontinuierlich durch den Reduktions-Rinnenofen 2. Bei einem Schlackespiegel von 1 m beträgt die durchschnittliche Verweilzeit ungefähr 30 Minuten. Bei Ofenwärmeverlusten von 1 GJ/h beträgt der Einheitsstromverbrauch ungefähr 35 kWh/t und die erforderliche Leistungsaufnahme 1 MW. Bei einer geschätzten Spannung von 100 V liegt die Stromstärke in der Größenordnung von 10 kA. Der geschätzte Koksverbrauch ist ca. 2 kg/t. Die Fertigschlacke enthält 0,5% Cu und 4% Magnetit. Der gesamte Energieverbrauch beläuft sich auf 105 kWh/t und der Koksverbrauch auf 10 kg/t.

Das Verfahren arbeitet gemäß dem Ausführungsbeispiel also als zweistufige Kupferschlackenreinigung in Lichtbogenöfen.

Es kann ein periodisches oder ein kontinuierliches Chargieren der Schlacke in den ersten Lichtbogenofen 1 erfolgen. In diesen Ofen 1 werden die Graphit- bzw. Kohlenstoffelektroden in die geschmolzene Schlacke eingeführt und über sie eine Stromzufuhr bewerkstelligt. Auf die Schlackenoberfläche wird Koks oder ein anderes Reduktionsmittel zugegeben. Die Regelung der Schlackentemperatur im Schlackenreinigungsofen erfolgt durch Regelung der Leistungsaufnahme. Schließlich erfolgt ein Abstechen der gewonnenen Metalle in Form von Kupferstein und metallischem Kupfer.

Auch im DC-Rinnenofen 2 kann ein periodisches oder kontinuierliches Abstechen der Schlacke erfolgen. Ein Gleichstrom wird zwischen der als Anode fungierenden Koksschicht an der Schlackenoberfläche und der als Kathode fungierenden flüssigen Stein angelegt. Das überlagerte, örtlich begrenzte Magnetfeld, das durch Elektromagnete oder Dauermagnete erzeugt wird, wird benutzt, um die Schlacke in Bewegung zu versetzen. Auf die Schlackenoberfläche wird Koks chargiert, um die Schichtdicke der Koksschicht konstant zu halten und um günstige elektrische Kontaktbedingungen mit den Graphit- oder Kohlenstoffelektroden aufrecht zu erhalten. Auch hier kann ein kontinuierliches oder ein periodisches Abstechen der gereinigten Fertigschlacke erfolgen. Gleichermaßen kann periodisch das Abstechen des Kupfersteins oder des Kupfersteins zusammen mit metallischem Kupfer erfolgen. Weiterhin wird eine Kupferstein-(Kupfer-)Schicht auf dem Ofenboden als flüssige Kathode aufrechterhalten, wobei die Katzode in Kontakt mit einem Graphitblock steht. Die Elektroden können auch aus einem anderen elektrisch leitendem Material bestehen.

Die Kupferschlacke kann diejenige Schlacke darstellen, die durch das Erschmelzen von Kupferkonzentraten zu Kupferstein oder unmittelbar zu Blisterkupfer gewonnen wird, sowie diejenige Schlacke, die durch das Umwandeln von Kupferstein gewonnen wird.

Als erster Lichtbogenofen 1 kann ein klassischer AC-Drehstrom-Lichtbogenofen oder ein DC-Lichtbogenofen eingesetzt werden.

Die Induktion eines durch Permanentmagneten oder Elektromagneten erzeugten Magnetfelds liegt bevorzugt im Bereich von 50 bis 1.000 Gauss, wobei das permanente magnetische Feld einen Teil des Querschnitts der Flüssigschlacke im Bereich der Elektrode oder Elektroden in Kontakt mit dem Koksbett abdecken.

Als Elektroden werden bevorzugt Graphit- oder Kohlenstoffelektroden eingesetzt. Der Ort der Elektroden lässt die Stromlinien die magnetischen Feldlinien kreuzen. Die optimale Positionierung der Elektroden führt dazu, dass die Stromlinien senkrecht zu den magnetischen Feldlinien verlaufen.

Wie erläutert, ist die Schicht des flüssigen Metalls bzw. der Metallstein unter der Schlacke in Kontakt mit einer Graphit- oder anderen Elektrode, die die Funktion der Kathode hat; der Kohlenstoff bzw. die Koksschicht an der Schlackeoberfläche ist in Kontakt mit einer Graphit- oder anderen Elektrode, die die Funktion der Anode hat.

Die Stärke des Gleichstroms liegt bevorzugt im Bereich zwischen 500 und 50.000 A, abhängig von der Größe des Schlackereinigungsaggregats, der Schlackemenge und der Temperatur.

Wengleich das vorgeschlagene Verfahren bevorzugt für die Gewinnung von Kupfer vorgesehen ist, kann es auch für andere Metalle wie für Blei (Pb), Zink (Zn), Platin (Pt), Chrom (Cr) oder Nickel (Ni) angewendet werden.

Durch die zweistufige Schlackereduktion und die Entfernung des Kupfers in zwei Lichtbogenöfen wird erreicht, dass der erste Drehstrom-Lichtbogenöfen zur Vorabreduktion der Schlacke und Abscheidung von Kupferstein eingesetzt werden kann, gefolgt von einer tiefgehenden Schlackereduktion und der Entfernung von Einschlüssen in einem DC-Reduktions-Rinnenofen mit elektromagnetischem Rühren. Der Einsatz von elektromagnetischem Rühren, welches den Stoffübergang auf die Reduktionsfläche und die Koaleszenz der Einschlüsse verbessert, gemeinsam mit Schlackeelektrolyse und elektrokinetischen Phänomenen ermöglichen eine wirksame Schlackereinigung und eine hohe Rückgewinnung von Kupfer. Es wird mit dem vorgeschlagenen Verfahren also - allgemein gesagt - auch eine Reduktion von Metalloxiden möglich. Im Primärenschmelzaggregat kann auch ein oxidisches Aufschmelzen von Konzentraten erfolgen.

Bezugszeichenliste:

| | |
|---|---|
| 1 | primäres oder sekundäres Schmelzaggregat (Wechselstromofen) |
| 2 | zweiter Ofen (Gleichstromofen) |
| 3 | Elektromagnet |
| 4 | Elektrode (Anode) |
| 5 | Elektrode (Kathode) |
| 6 | elektrische Verbindung (Graphitelektrode) |
| 7 | elektrische Verbindung (Graphitelektrode) |
| 8 | Verbindungsmittel |
| 9 | Elektrode |
| 10 | Elektrode |
| 11 | Wechselstromquelle |
| 12 | Gleichstromquelle |
| 13 | elektrische Spule |
| 14 | elektrische Spule |
| 15 | Schlacke |
| 16 | Schlackeneintritt |

17      Schlackenaustritt

**Patentansprüche**

**1.** Verfahren zur kontinuierlichen oder diskontinuierlichen Gewinnung eines Metalls oder mehrerer Metalle aus einer das Metall oder eine Verbindung des Metalls enthaltenden Schlacke, bei dem die verflüssigte metallhaltige Schlacke in einem primären oder sekundären Schmelzaggregat (1) erhitzt wird,
**dadurch gekennzeichnet,**
**dass** die metallhaltige Schlacke in einem als Wechselstrom-Elektroofen ausgebildeten primären oder sekundären Schmelzaggregat (1) erhitzt wird und die Schmelze dann von dem primären oder sekundären Schmelzaggregat (1) in einen als Gleichstrom-Elektroofen ausgebildeten Ofen (2) verbracht wird, in dem eine elektrolytische Abscheidung des zu gewinnenden Metalls erfolgt, wobei in das primäre oder sekundäre Schmelzaggregat (1) ein Reduktionsmittel in Form von Calciumsilizid (CaSi), Calciumkarbid ($CaC_2$), Ferrosilicium (FeSi) und/oder Aluminium (Al) aufgegeben und/oder injiziert wird.

**2.** Verfahren nach Anspruch 1, **dadurch gekennzeichnet, dass** als primäres oder sekundäres Schmelzaggregat (1) ein Lichtbogenofen eingesetzt wird.

**3.** Verfahren nach Anspruch 1 oder 2, **dadurch gekennzeichnet, dass** das zu gewinnende Metall Kupfer (Cu) ist, das sich in einer kupferhaltigen Schlacke befindet.

**4.** Verfahren nach Anspruch 1 oder 2, **dadurch gekennzeichnet, dass** das zu gewinnende Metall Blei (Pb), Zink (Zn), Platin (Pt), Chrom (Cr) oder Nickel (Ni) ist, das sich in einer Schlacke befindet.

**5.** Verfahren nach einem der Ansprüche 1 bis 4, **dadurch gekennzeichnet, dass** in dem als Wechselstrom-Elektroofen ausgebildeten primären oder sekundären Schmelzaggregat (1) eine Vorabreduktion der Schlacke und ein Abscheiden von Metallstein oder einer Metalllegierung, insbesondere von Kupferstein, erfolgt und dass in dem zweiten als Gleichstrom-Elektroofen ausgebildeten Ofen (2) eine tiefgehende Schlackenreduktion und ein Entfernen von Einschlüssen erfolgt.

**6.** Verfahren nach einem der Ansprüche 1 bis 5, **dadurch gekennzeichnet, dass** in dem zweiten als Gleichstrom-Elektroofen ausgebildeten Ofen (2) während der Gewinnung des Metalls ein elektromagnetisches Rühren der Schmelze erfolgt.

**7.** Verfahren nach Anspruch 6, **dadurch gekennzeichnet, dass** zur Erzeugung des elektromagnetischen Rührens mindestens ein Elektromagnet (3) auf die sich im zweiten Ofen (2) befindliche Schmelze wirkt.

**8.** Verfahren nach Anspruch 6, **dadurch gekennzeichnet, dass** zur Erzeugung des elektromagnetischen Rührens mindestens ein Dauermagnet auf die sich im zweiten Ofen (2) befindliche Schmelze wirkt.

**9.** Verfahren nach Anspruch 7 oder 8, **dadurch gekennzeichnet, dass** der mindestens eine Magnet ein Magnetfeld zwischen 50 und 1.000 Gauss erzeugt und dass das Magnetfeld zumindest einen Teil des Querschnittes der Schmelze und des Bereichs der Elektroden (4, 5) in dem zweiten Ofen (2) erfasst.

**10.** Verfahren nach einem der Ansprüche 1 bis 9, **dadurch gekennzeichnet, dass** in das primäre oder sekundäre Schmelzaggregat (1) während des Erhitzens weiterhin als Reduktionsmittel Koks zugegeben wird.

**11.** Verfahren nach einem der Ansprüche 1 bis 10, **dadurch gekennzeichnet, dass** auf die Schmelzeoberfläche in dem zweiten Ofen (2) kohlenstoffhaltiges Material, insbesondere Koks, so aufgegeben wird, dass sich eine Schicht des kohlenstoffhaltiges Materials mit im wesentlichen konstanter Dicke ausbildet, wobei die Schicht, als Anode (4) wirkend, mit einer elektrischen Verbindung (6) in Kontakt steht.

**12.** Verfahren nach einem der Ansprüche 1 bis 11, **dadurch gekennzeichnet, dass** im Bodenbereich unter der Schmelze in dem zweiten Ofen (2) eine Schicht aus Metallstein, insbesondere aus Kupferstein, mit im wesentlichen konstanter Dicke aufrechterhalten wird, wobei die Schicht, als Kathode (5) wirkend, mit einer elektrischen Verbindung (7) in Kontakt steht.

**Claims**

1. A method for the continuous or discontinuous recovery of a metal or several metals from a slag containing the metal or a compound of the metal, in which the liquefied metal-containing slag is heated in a primary or secondary smelting unit (1), **characterised in that** the metal-containing slag is heated in a primary or secondary smelting unit (1) designed as an alternating-current electric furnace and the melt is then fed from the primary or secondary smelting unit (1) into a furnace (2) designed as a direct-current electric furnace, in which an electrolytic separation of the metal to be recovered takes place, wherein a reducing agent in the form of calcium silicide (CaSi), calcium carbide ($CaC_2$), ferrosilicon (FeO), aluminium (A1) and/or reducing gases is added and/or injected into the primary or secondary smelting unit (1).

2. Method according to claim 1, **characterised in that** an arc furnace is used as the primary or secondary smelting unit (1).

3. Method according to claim 1 or claim 2, **characterised in that** the metal to be recovered is copper (Cu) present in a copper-containing slag.

4. Method according to claim 1 or claim 2, **characterised in that** the metal to be recovered is lead (Pb), zinc (Zn), platinum (Pt), chromium (Cr) or nickel (Ni) present in a slag.

5. Method according to any one of claims 1 to 4, **characterised in that** a preliminary reduction of the slag and a separation of matte or a metal alloy, particularly copper matte, are carried out in the primary or secondary smelting unit (1), which is designed as an alternating-current electric furnace, and that intensive slag reduction and removal of inclusions are carried out in the second furnace (2), which is designed as a direct-current electric furnace.

6. Method according to any one of claims 1 to 5, **characterised in that** in the second furnace (2), which is designed as a direct-current electric furnace, the melt is electromagnetically stirred during the recovery of the metal.

7. Method according to claim 6, **characterised in that** to produce the electromagnetic stirring at least one electromagnet (3) acts on the melt present in the second furnace (2).

8. Method according to claim 6, **characterised in that** to produce the electromagnetic stirring at least one permanent magnets acts on the melt present in the second furnace (2).

9. Method according to claim 7 or 8, **characterised in that** the at least one magnet generates a magnetic field of between 50 to 1,000 gauss and that the magnetic field covers at least part of the cross-section of the melt and the region of the electrodes (4, 5) in the second furnace (2).

10. Method according to any one of claims 1 to 9, **characterised in that** coke is fed into the primary or secondary smelting unit (1) during the heating as an additional reducing agent.

11. Method according to any one of claims 1 to 10, **characterised in that** carbon-containing material, particularly coke, is fed onto the melt surface in the second furnace (2) in such a way that a layer of the carbon-containing material of substantially constant thickness forms, and the layer, which acts as an anode (4), is in contact with an electrical connection (6).

12. Method according to any one of claims 1 to 11, **characterised in that** a layer of matte, particularly copper matte, of substantially constant thickness is maintained in the bottom region below the melt in the second furnace (2), wherein the layer, which acts as a cathode (5), is in contact with an electrical connection (7).

**Revendications**

1. Procédé pour la récupération continue ou discontinue d'un métal ou de plusieurs métaux à partir d'un laitier contenant le métal ou un composé du métal, dans lequel le laitier liquéfié contenant le métal est chauffé dans un creuset de fusion primaire ou secondaire (1),
   **caractérisé en ce que**
   le laitier contenant le métal est chauffé dans un creuset de fusion primaire ou secondaire (1) réalisé sous forme d'un four électrique à courant alternatif et le matériau en fusion est alors amené depuis le creuset de fusion primaire ou secondaire (1) jusque dans un four (2) réalisé sous forme d'un four électrique à courant continu dans lequel se produit une séparation électrolytique du métal à récupérer, dans lequel on ajoute et/ou on injecte dans le creuset de fusion primaire ou secondaire (1) un agent de réduction sous la forme de siliciure de calcium (CaSi), de carbure de calcium (CaC$_2$), de ferro-silicium (FeSi) et/ou d'aluminium (Al).

2. Procédé selon la revendication 1, **caractérisé en ce que** l'on emploie un four à arc électrique à titre de creuset de fusion primaire ou secondaire (1).

3. Procédé selon la revendication 1 ou 2, **caractérisé en ce que** le métal à récupérer est du cuivre (Cu) qui se trouve dans un laitier contenant du cuivre.

4. Procédé selon la revendication 1 ou 2, **caractérisé en ce que** le métal à récupérer est du plomb (Pb), du zinc (Zn), du platine (Pt), du chrome (Cr) ou du nickel (Ni), qui se trouve dans un laitier.

5. Procédé selon l'une des revendications 1 à 4, **caractérisé en ce que** dans le creuset de fusion primaire ou secondaire (1) réalisé sous forme de four électrique à courant alternatif a lieu une réduction préliminaire du laitier et une séparation de métal brut ou d'un alliage métallique, en particulier de cuivre brut, et **en ce que** dans le second four (2) réalisé sous forme de four électrique à courant continu a lieu une réduction intime du laitier et une suppression des inclusions.

6. Procédé selon l'une des revendications 1 à 5, **caractérisé en ce que** dans le second four (2) réalisé sous forme de four électrique à courant continu a lieu une agitation électromagnétique du produit en fusion pendant la récupération du métal.

7. Procédé selon la revendication 6, **caractérisé en ce que** pour produire l'agitation électromagnétique, au moins un électroaimant (3) agit sur le produit en fusion qui se trouve dans le second four (2).

8. Procédé selon la revendication 6, **caractérisé en ce que** pour produire l'agitation électromagnétique, au moins un aimant permanent agit sur le produit en fusion qui se trouve dans le second four (2).

9. Procédé selon la revendication 7 ou 8, **caractérisé en ce que** ledit au moins un élément produit un champ magnétique entre 50 et 1000 Gauss, et **en ce que** le champ magnétique englobe au moins une partie de la section transversale du produit en fusion et de la zone des électrodes (4, 5) dans le second four (2).

10. Procédé selon l'une des revendications 1 à 9, **caractérisé en ce que** l'on ajoute encore du coke à titre d'agent de réduction pendant le chauffage dans le creuset de fusion primaire ou secondaire (1).

11. Procédé selon l'une des revendications 1 à 10, **caractérisé en ce que** l'on apporte sur la surface du produit en fusion dans le second four (2) un matériau contenant du carbone, en particulier du coke, et **en ce qu'**il se forme une couche du matériau contenant du carbone avec une épaisseur sensiblement constante, ladite couche, faisant office d'anode (4), étant en contact avec une liaison électrique (6).

12. Procédé selon l'une des revendications 1 à 11, **caractérisé en ce que** dans la zone du fond au-dessous du laitier dans le second four (2) on maintient une couche de métal brut, en particulier de cuivre brut, avec une épaisseur sensiblement constante, ladite couche, faisant office de cathode (5), étant en contact avec une liaison électrique (7).

# Fig.1

EP 1 937 859 B1

*Fig. 2a*

*Fig. 2b*

EP 1 937 859 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4110107 A
- US 4036636 A
- WO 0149890 A1
- US 4060409 A
- US 6436169 B
- US 5765489 A
- WO 2006131372 A1
- EP 0487032 B1
- EP 0487031 B1